Europäisches Patentamt

European Patent Office

Office européen des brevets

(19)

(11) Veröffentlichungsnummer: **0 067 971**
A2

(12) # EUROPÄISCHE PATENTANMELDUNG

(21) Anmeldenummer: 82104612.5

(22) Anmeldetag: 27.05.82

(51) Int. Cl.³: **G 11 C 19/00**

(30) Priorität: 23.06.81 DE 3124516

(43) Veröffentlichungstag der Anmeldung:
29.12.82 Patentblatt 82/52

(84) Benannte Vertragsstaaten:
DE FR GB IT NL SE

(71) Anmelder: Licentia Patent-Verwaltungs-GmbH
Theodor-Stern-Kai 1
D-6000 Frankfurt/Main 70(DE)

(72) Erfinder: Annecke, Karl-Heinz, Dr.-Ing.
Nansenstrasse 25/2
D-7150 Backnang(DE)

(74) Vertreter: Schickle, Gerhard, Dipl.-Ing. et al,
Licentia Patent-Verwaltungs-GmbH Theodor-Stern-Kai
1
D-6000 Frankfurt/Main 70(DE)

(54) Anordnung zur Verminderung von Phasenschwankungen im Ausgangstakt von elastischen Speichern.

(57) Die Erfindung betrifft eine Anordnung zur Verminderung von Phasenschwankungen im Ausgangstakt von elastischen Speichern, die bei Ausfall und Wiederkehr des externen Eingangataktes entstehen. Bisher waren bei Wiederkehr des externen Eingangstaktes langwierige und aufwendige Regelvorgänge notwendig, um den Mindestabstand zwischen der eingeschriebenen und ausgelesenen Speicherzelle des elastischen Speichers wieder herzustellen. Erfindungsgemäß wird sofort bei Ausfall des externen Eingangstaktes der Schreib- und der Lesetakt durch einen mit der Sollfrequenz fo erzeugten Takt ersetzt, so daß der Mindestabstand zwischen der eingeschriebenen und der ausgelesenen Speicherzelle auch für die Zeit des Betriebsausfalls erhalten bleibt und bei Wiedereinsetzen des externen Eingangstaktes keine zusätzlichen Regelvorgänge notwendig sind.

FIG. 4

EP 0 067 971 A2

Croydon Printing Company Ltd.

- 2 -

Licentia Patent-Verwaltungs-GmbH          Z13 PTL-BK/Mo/be
Theodor-Stern-Kai 1                       BK 81/66
D-6000  Frankfurt 70

Anordnung zur Verminderung von Phasenschwankungen
im Ausgangstakt von elastischen Speichern

Bei der Datenübertragung werden elastische Speicher zur Einfügung von Zusatzdaten (Stopf-Vorgang), zur Extraktion von Zusatzdaten (Entstopf-Vorgang) oder zur Umwandlung eines nicht kontinuierlich fließenden Datenstromes in einen Datenstrom mit einem Takt, der gleich dem mittleren Takt des nicht kontinuierlichen Datenstromes ist (Ent-Jitterung), benutzt.

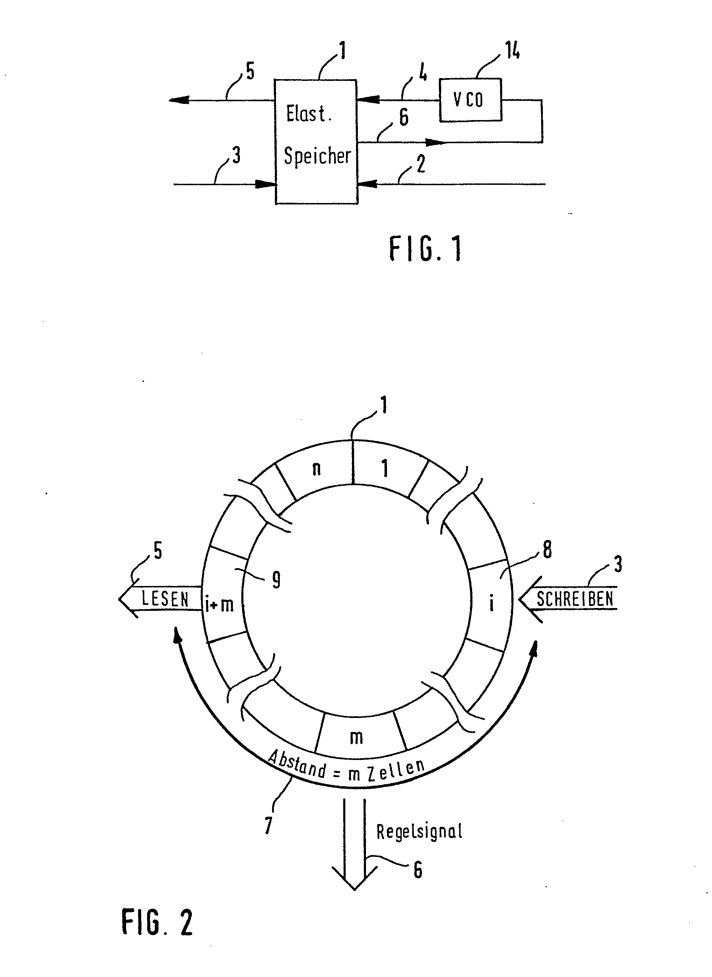

Ein elastischer Speicher kann auf verschiedene Weise, z.B. mit Hilfe von Schieberegistern, realisiert werden. Die Figur 1 und 2 zeigen die üblichen, von der internen Struktur des elastischen Speichers weitgehend unabhängigen Eingangs- und Ausgangssignale. Dabei bedeutet:

1:    elastischer Speicher,

2:    Takt zum Einschreiben der Daten (Schreibtakt),

3:    einzuschreibende Daten,

4:  Takt zum Auslesen der Daten (Lesetakt),

5:  ausgelesene Daten,

6:  Regelsignal, welches die Information über den Abstand zwischen der gerade eingeschriebenen Zelle i und der gerade gelesenen Zelle i+m des aus n Zellen bestehenden elastischen Speichers beinhaltet.

7:  Abstand m zwischen der gerade eingeschriebenen und ausgelesenen Zelle,

8:  eingeschriebene Zelle i,

9:  ausgelesene Zelle i+m,

14: spannungsgesteuerter Oszillator.

Durch den Lesetakt wird der Lesevorgang von Zelle zu Zelle fortgeschaltet und durch den Schreibtakt wird der Schreibvorgang von Zelle zu Zelle fortgeschaltet. Das Regelsignal 6 wird zur Steuerung des Schreibtaktes bei einem Stopf-Vorgang und zur Steuerung des Lesetaktes bei einem Entstopf-Vorgang bzw. bei einer Ent-Jitterung benutzt; und zwar in der Art, daß der Abstand 7 zwischen eingeschriebener und gelesener Zelle einen bestimmten Mindestwert nicht unterschreitet und der mittlere Lesetakt gleich dem mittleren Schreibtakt ist.

Als regelbarer Lesetaktgenerator wird üblicherweise ein spannungsgesteuerter Oszillator VCO 14 eingesetzt, dessen Frequenz durch das Regelsignal in der beschriebenen Weise geregelt wird.

Probleme entstehen bei dieser Anordnung, wenn ein externer Eingangstakt ausfällt. Dann entfällt entweder der Schreibtakt oder der Lesetakt, oder beide Takte. In diesem Falle steht kein sinnvolles Regelsignal 6 mehr zur Verfügung. Das bedeutet, daß der Abstand 7 beliebige Werte zwischen 0 und n annehmen kann. Wird nun der externe Eingangstakt wieder zugeschaltet, dann ist die Funktion der Schaltung erst nach einem lang andauernden, aufwendigen Regelvorgang zu erreichen, bis sich der Abstand 7 von mindestens m Zellen wieder
eingestellt hat.

Diese Probleme werden heute üblicherweise dadurch gelöst,
daß bei Ausfall eines Taktes das Regelsignal 6 durch einen
Sollwert 12 ersetzt wird und das erneute Zuschalten eines
Taktes so lange verzögert wird, bis der Abstand zwischen
gelesener und eingeschriebener Zelle größer als der geforderte Mindestabstand ist. Die Steuerung dieser Vorgänge erfordert zusätzliche, aufwendige Logik.

Der Erfindung liegt die Aufgabe zugrunde, eine Anordnung zur
Verminderung von Phasenschwankungen im Ausgangstakt von elastischen Speichern anzugeben, mit der es möglich ist, während dem Ausfall des externen Eingangstaktes, d.h. bei Betriebsausfall, den Abstand zwischen der eingeschriebenen
Zelle und der ausgelesenen Zelle aufrecht zu erhalten, so
daß beim Wiedereinsetzen des externen Eingangstaktes keine
zusätzlichen Regelvorgänge notwendig sind. Dabei soll die
Anordnung auf einfache Weise realisierbar sein.

Die Aufgabe wird gelöst wie im Anspruch 1 beschrieben. Die
Unteransprüche geben vorteilhafte Weiterbildungen an.

Im folgenden sei die Erfindung beispielhaft anhand von
Figuren näher erläutert.

Figur 3    zeigt eine erfindungsgemäße Anordnung gemäß Anspruch 2.
Figur 4    zeigt eine erfindungsgemäße Anordnung gemäß Anspruch 3.

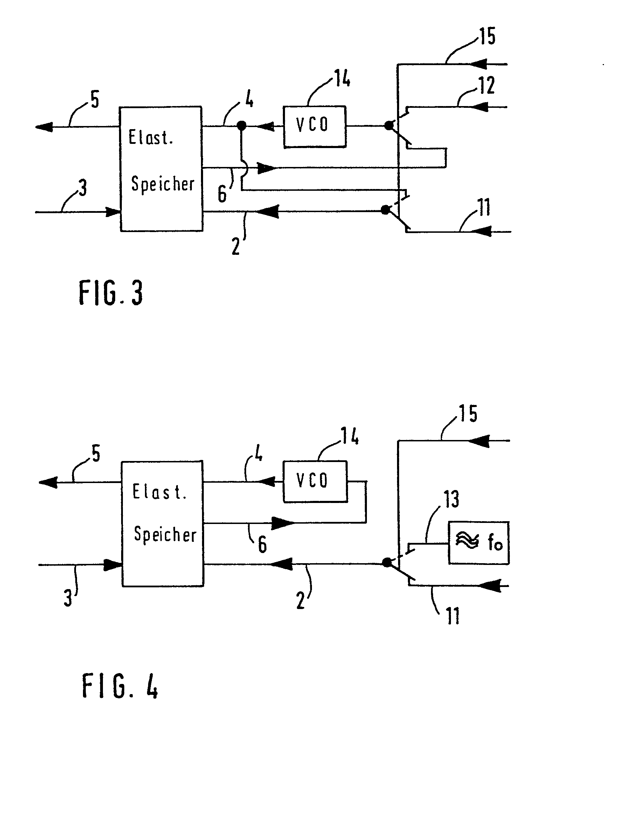

Bei dem Ausführungsbeispiel gemäß Figur 3 wird bei Ausfall
des externen Taktes 11 ein Umschaltsignal 15 erzeugt, welches das Regelsignal 6 durch einen Sollwert 12 ersetzt und den Schreibtakt 2 direkt mit dem Lesetakt 4 verbindet.

Bei dem Ausführungsbeispiel gemäß Figur 4 wird der ausgefallene externe Eingangstakt 11 durch ein Umschaltsignal 15 auf einen Hilfstakt 13 geschaltet, der von einem mit der Sollfrequenz fo laufenden Taktoszillator geliefert wird. Aufgrund des entstehenden Regelsignals 6 läuft auch der den Lesetakt erzeugende spannungsgesteuerte Oszillator VCO 14 dann mit der Sollfrequenz fo.

In beiden Ausführungsformen ist sichergestellt, daß der Abstand 7 zwischen eingeschriebener und gelesener Zelle den Mindestabstand nicht unterschreitet und die mittleren Lese- und Schreibtakte gleich sind.

Daher sind beim erneuten Zuschalten des externen Schreibtaktes 11 nur Regelvorgänge notwendig, durch die maximal ein Zeitversatz von ± 0,5 Takten auszugleichen ist. Regelvorgänge dieser Art treten auch bei einem ungestörten Betrieb eines elastischen Speichers auf.

Damit ist mit den beschriebenen Anordnungen eine Taktumschaltung in elastischen Speichern bei minimalen Regelvorgängen ohne großen Aufwand möglich.

- - - - - - - - - -

Licentia Patent-Verwaltungs-GmbH          Z13 PTL-BK/Mo/be
Theodor-Stern-Kai 1                       BK 81/66
D-6000  Frankfurt 70


Patentansprüche


1. Anordnung zur Verminderung von Phasenschwankungen im
   Ausgangstakt von elastischen Speichern, die bei Ausfall
   und Wiederkehr des externen Eingangstaktes entstehen,
   dadurch gekennzeichnet, daß vor oder sofort bei Ausfall
   des externen Eingangstaktes (11) der Schreibtakt (2) und
   der Lesetakt (4) durch einen mit der Sollfrequenz (fo)
   erzeugten Takt ersetzbar sind, so daß der Abstand zwischen der Speicherzelle (8), in die eingeschrieben wird
   und der Speicherzelle (9), aus der ausgelesen wird, auch
   für die Zeit des Taktausfalles erhalten bleibt.

2. Anordnung nach Anspruch 1, dadurch gekennzeichnet, daß
   vor oder sofort bei Ausfall des externen Eingangstaktes
   (11) die Steuerspannung des den Lesetakt (4) erzeugenden
   spannungsgesteuerten Oszillators (14) durch eine Sollwertspannung (12) ersetzt wird und daß der so erzeugte
   Takt, den Schreibtakt (2) und den Lesetakt (4) ersetzt
   (Fig. 3).

**0067971**

3. Anordnung nach Anspruch 1, <u>dadurch gekennzeichnet</u>, daß vor oder sofort bei Ausfall des externen Eingangstaktes (11) der Schreibtakt (2) durch das Ausgangssignal (13) eines mit der Sollfrequenz (fo) schwingenden Oszillators ersetzt wird, so daß sich der Lesetakt (4) aufgrund des Regelsignals (6) ebenfalls auf die Sollfrequenz (fo) einstellt (Fig. 4).

FIG. 1

FIG. 2

FIG. 3

FIG. 4